# EUROPEAN PATENT APPLICATION

(11) **EP 4 631 706 A1**
(43) Date of publication of application: **15.10.2025**
(21) Application number: 25184650.7
(22) Date of filing: 27.01.2022
(51) Int. Cl.: B29D 35/12, B29C 35/08, B29C 44/44

(54) **MOLD AND METHOD FOR MANUFACTURING A SHOE SOLE BY MOLDING**

(30) Priority: 28.01.2021 DE 102021200759; 11.06.2021 DE 102021205928
(62) Divisional of application: 22153604.8
(71) Applicant: adidas AG, 91074 Herzogenaurach (DE)
(72) Inventor: SILTAMÄKI, Jarkko, 91074 Herzogenaurach (DE); GOTHE, Bastian, 91074 Herzogenaurach (DE); WEIGER, Helge, 91074 Herzogenaurach (DE); SEEFRIED, Andreas Johannes, 91074 Herzogenaurach (DE); DREXLER, Maximilian, 91074 Herzogenaurach (DE); PRICE, Daniel S., 91074 Herzogenaurach (DE); SCHNEIDER, Kevin, 91054 Erlangen (DE); DRUMMER, Dietmar Klaus, 91054 Erlangen (DE)
(74) Representative: Bardehle Pagenberg Partnerschaft mbB Patentanwälte Rechtsanwälte

(57) **Abstract**

The present invention relates to a mold for molding a component, in particular a piece of sports apparel, a method for manufacturing the component using such a mold and a shoe with such a component. In one embodiment, a mold (100) for molding a component (120), in particular a piece of sports apparel (120), comprises: (a.) a mixture of a polymer material and a filler material, (b.) wherein the polymer material comprises a foamed material, and (c.) wherein the filler material is adapted to allow a heating of the component inside the mold (100) by means of an electromagnetic field.

## Description

### 1. Technical field

The present invention relates to a mold for molding a component, in particular a piece of sports apparel, a method for manufacturing the component using such a mold and a shoe with such a component.

### 2. Prior Art

The use of particle foam materials, i.e. materials made from individual particles of expanded plastic materials, has found its way into the manufacture of cushioning elements for sports apparel, particularly the manufacture of shoe soles for sports shoes. In particular, the use of particles of expanded thermoplastic polyurethane, eTPU, which are fused at their surfaces by subjecting them to pressurized steam within a mold (often called "steam chest molding" in the art), has been considered for the manufacture of shoe soles.

However, conventional molds for steam chest molding shoe soles are not adapted to the specific requirements of the used materials. For example, the steam chest molding process of a shoe sole made from particles with a conventional mold requires a large amount of energy for heating the mold, as conventional molds typically have a high mass. Moreover, the cooling process of such molds is slow and therefore leads to extended cycle times. Finally, steam chest molding shoe soles from particles requires to uniformly supplying the pressurized steam to the particles in order to achieve a homogeneous interconnection of the particles. Therefore, conventional molds are not adapted to such a uniform medium supply.

Energy carriers other than pressurized steam have also been considered. In particular, a method for the manufacture of a cushioning element for sports apparel that comprises loading a mold with a first material comprising particles of an expanded material and fusing the surfaces of the particles by supplying energy in the form of at least one electromagnetic field has been described in DE 10 2015 202 013 A1 and EP 3 053 732 A1. However, these methods leave still room for improvement, because they do not yet take full account of the specific material characteristics of the mold material that, in particular, for the manufacture of modern performance footwear like running shoes are necessary, specifically when it comes to their soles and midsoles.

Further prior art is known from US 6 346 210 B1, US 5 194 190 A, US 2016 /0 200 011 A1 and DE 10 2020 110 352 A1.

It is an object underlying the present invention to overcome said disadvantages of the prior art and to provide an improved mold for molding a component, in particular a piece of sports apparel.

### 3. Summary of the invention

This object is accomplished by the teachings of the independent claims. Advantageous embodiments are contained in the dependent claims.

In one embodiment, a mold for molding a component, in particular a piece of sports apparel, comprises (a.) a mixture of a polymer material and a filler material, (b.) wherein the filler material is adapted to allow a heating of the component inside the mold by means of an electromagnetic field.

The inventors of the present invention have surprisingly found that such a mold provides an improved approach for molding pieces of sports apparel. By using such a mixture of a polymer material and a filler material the specific characteristics of the mold material can be significantly improved without deteriorating the remaining material characteristics of the mold, e.g. its stability, during the molding process. Moreover, the use of an electromagnetic field, in particular electromagnetic radiation, for heating the piece of sports apparel inside the mold allows the manufacture of components with various thicknesses and complex geometry, too, since the energy for heating is not coupled to any kind of media transport, for example, the introduction of pressurized steam. The electromagnetic radiation may be chosen such that it permeates the mold loaded with the material for the piece of sports apparel essentially homogeneously and supplies an essentially constant amount of energy to all portions of the piece of sports apparel, such that a homogeneous and constant molding is achieved throughout the entire piece of sports apparel and in every depth of the piece of sports apparel.

It is explicitly mentioned at this point that, for clarity reasons, a filler material may be a solid additive incorporated into the polymer material. In this way, the filler material may be a functional filler used to improve the performance of the polymer mold material. In other words, when added to the polymer material, a particular property of the polymer mold material is improved, up to a certain extent, as the amount of filler material increases. Moreover, mixtures of fillers can help to "tailor" the material characteristics and balance mechanical performance with dielectric behaviour of the whole mold.

The filler material may be adapted to increase the thermal conductivity of the mold. As a consequence, the loss of heat energy when heating the mold as thermal inflow is significantly increased, because the heat flows away from the mold. Moreover, the increased thermal conductivity of the mold also improves the cooling process as thermal outflow after molding which is further supported by the mixture of a polymer material and a filler material according to the present invention. In addition, there is no further need for additional external or internal cooling of the component so that the whole molding process is simplified. Summarizing, the overall productivity of the manufacturing process for a piece of sports apparel can be increased by such a mold.

The term "thermal conductivity", as used in the present application, refers to the ability of a mold material to conduct heat. In other words, the thermal conduction is defined as the transport of energy due to random molecular motion across a temperature gradient. It is distinguished from energy transport by convection and molecular work in that it does not involve macroscopic flows or work-performing internal stresses. In the International System of Units (SI), the thermal conductivity is measured in watts per meter and kelvin (W/(m·K)).

The filler material may be adapted to increase the permittivity of the mold compared to the component. Moreover, the filler material may comprise a dielectric material, in particular, a mixture of at least two inorganic materials, preferably at least one of the following: a metal nitride, a metal oxide, a metal carbide, a metal sulfide, a metal silicate, a silicon carbide and silicon nitride, most preferably boron nitride, BN. The permittivity of the mold has a direct influence on the field strength of the electromagnetic field or electromagnetic radiation inside the mold (for a constant 'external' field being applied to the mold), as the skilled person understands, and will also influence the field distribution (e.g., the local value of the field strength) inside the mold. A further advantage of using an increased permittivity of the mold to influence the electromagnetic field distribution is that filler materials with a wide variety of permittivity-values are known and available, such that a large degree of tuning and adaption is possible in this manner, by choosing and/or combining different filler materials. Moreover, an increased permittivity of the mold may indirectly reduce the loss of heat energy during the molding process, in that the electromagnetic field density is concentrated on the component material - and away from the mold material itself.

Furthermore, the filler material may comprise at least one of the following: a mixture of a carbon material and an inorganic material, carbon fiber, glassy carbon, carbon nanotubes, carbon nanobuds, aerographite, linear acetylenic carbon, q-carbon, graphene, a salt, a monocrystalline powder, a polycrystalline powder, an amorphous powder, a glass fiber. Besides the effects mentioned above, fibers or fiber composite materials are lightweight yet exceptionally strong. In particular, glass or glass fibers are fairly cheap and are moisture resistant as well as have a high strength to weight ratio. Therefore, the mold materials may influence the performance of the whole process and a tailored selection of mold materials of different dielectric properties allows for achieving optimal properties for efficient dielectric heating and subsequent cooling. Moreover, a certain range of electrical resistivity and properties related to mechanical stability may also be considered in the selection of the materials.

All of these described embodiments with different filler materials having different shapes, optical, thermal and electrical properties or material characteristics follow the same idea of achieving optimal properties for efficient molding by dielectric heating of the piece of sports apparel inside the mold and the subsequent cooling of the whole mold. For example, if the piece of sports apparel to be molded is a shoe sole, both reduced cycle times when manufacturing the shoe sole and a high quality of the shoe sole may be provided with the mold of the present invention.

The term "sports apparel", as used in the present application, may refer to clothing, including footwear and accessories, worn for sport or physical exercise. Sport-specific clothing or garments may be worn for most sports and physical exercise, for practical, comfort or safety reasons. Typical sport-specific garments may include tracksuits, shorts, T-shirts and polo shirts. Specialized garments may include swimsuits (for swimming), wet suits (for diving or surfing), ski suits (for skiing) and leotards (for gymnastics). Sports footwear may include trainers, football boots, riding boots, and ice skates. Sportswear also may include bikini and some crop tops and undergarments, such as the jockstrap and sports bra. Sportswear may be also at times worn as casual fashion clothing.

The mixture may comprise the filler material in an amount of 1 to 75 % by volume, in particular 1 to 30 % by volume, preferably 1 to 25 % by volume, more preferably 1 to 20 % by volume, most preferably 5 to 20 % by volume or the mixture may comprise the filler material in an amount of 10 to 40 % by volume, in particular 15 to 35 % by volume. The indicated values have been found to provide a reasonable compromise between optimized optical properties for efficient dielectric heating and sufficient thermal properties to provide increased thermal conductivity of the mold for the subsequent cooling.

The polymer material may comprise a thermoplastic material, preferably at least one of the following: polyethylene terephthalate, PET, polybutylene terephthalate, PBT, polyoxymethylene, POM, polyamide-imide, PAI, polycarbonate, PC, polyketones, PK, polyether ether ketone, PEEK, or polyethylene, PE. Moreover, the polymer material may comprise a foamed material. These materials have turned out advantageous and may hence be used in the context of the present invention. For example, POM has a dielectric loss factor D of approximately 0.008 for radio frequency radiation. This material may thus be essentially transparent to radio frequency radiation, since it absorbs only a small part of the electromagnetic radiation and may, due to the relatively low loss factor, be formed with a certain thickness.

The polymer material may be adapted to increase the permittivity of the mold compared to the component. For example, certain polymer materials from certain polymer grades may be used due to their high intrinsic permittivity compared to the component material. Therefore, since the permittivity of the mold has a direct influence on the field strength of the electromagnetic field or electromagnetic radiation inside the mold, an optimized thermal inflow and outflow of the mold may be provided in that the electromagnetic field density is concentrated on the component material. Examples may comprise at least one of polyacrylonitrile, PAN, polyamide or polyethylene terephthalate, PET. In preferred embodiments, the mold may comprise a mixture of PET and 30 % by volume of Aluminium oxide, Al2O3, or a mixture of POM and titanium dioxide (TiO2).

The polymer material may be adapted to increase the dielectric loss factor of the mold. It is also conceivable that certain portions of the mold may be adapted to increase the dielectric loss factor. Such embodiments allow to selectively introduce excessive heat buildup in the whole mold or only at specific portions within the mold by means of high dielectric loss since the mold material may absorb a high amount of the electromagnetic radiation. Therefore, an optimized thermal inflow and outflow of the mold may also be provided. Examples may comprise at least one of polyketones, PK, polyvinylidene fluoride or polyvinylidene difluoride, PVDF or polyamide-imide, PAI. In a preferred embodiment, the mold may comprise a mixture of POM and titanium dioxide, TiO2.

The mold may be a sole mold and the component may be a shoe sole, in particular a midsole. The molding process by dielectric heating and the subsequent cooling process of the shoe sole are much faster so that the productivity may be improved. Moreover, the homogeneous and constant molding allows the manufacture of a lightweight, durable shoe sole that offers optimum cushioning properties.

The invention further concerns a method for manufacturing a component, in particular a piece of sports apparel, the method comprising the step of (a.) molding the component using a mold as described herein. Moreover, the method may further comprise at least one of the following steps: (b.) loading the mold with a first material for the component which comprises particles of an expanded material and (c.) heating the first material and/or the mixture of the polymer material and the filler material of the mold and/or a susceptor of the mold by means of an electromagnetic field. The susceptor may comprise at least one of the following materials: expanded polypropylene, ePP, polyurethane, PU, polylactide, PLA, polyether-block-amide, PEBA, or polyethylene terephthalate, PET.

The heating step may comprise the step of fusing the surfaces of the particles. As mentioned above, an electromagnetic field, in particular electromagnetic radiation, may be chosen such that it permeates the mold loaded with the particles essentially homogeneously and supplies an essentially constant amount of energy to all particles, such that a homogeneous and constant fusing of the particle surfaces is achieved throughout the entire component and in every depth of the component.

The particles for the component may comprise at least one of the following materials: expanded thermoplastic polyurethane, eTPU, expanded polyamide, ePA, expanded polyetherblockamide, ePEBA, polylactide, PLA, polyether-block-amide, PEBA, polyethylene terephthalate, PET, polybutylene terephthalate, PBT, thermoplastic polyester ether elastomer, TPEE. For example, for use in the manufacture of shoe soles, particles of eTPU, ePEBA and/or ePA have turned out advantageous and may hence be used in the context of the present invention.

The particles may be filled into the mold using conventional techniques known in the art, for example, pressure filling through a filling gate.

The particles may comprise a foamed material. For example, using a foamed material for both the particles and for the surface of the mold leads to a similar loss factor so that a substantially uniform heating of both the particles and the mold may be provided so that a better surface fusion of the component may be obtained.

The electromagnetic field may be in the radio frequency range of 30 kHz - 300 GHz. The electromagnetic field may, for example, be supplied in the form of radiation in the microwave range, i.e. with a frequency in the range from 300 MHz - 300 GHz.

Microwave generators are commercially available and may be implemented into a manufacturing device for using an inventive mold with comparatively little effort. In addition, it may be possible to focus the microwave radiation essentially onto a cavity of the mold in which the component material is loaded by a suitable device, such that the energy efficiency of a method using the mold is increased. Furthermore, the intensity and frequency of the microwave radiation may easily be changed and adapted to the respective requirements.

The electromagnetic field may be in the radio frequency range of 1 MHz - 200 MHz, more preferably in the range of 1 MHz - 50 MHz, most preferably in the range of 25 - 30 MHz. In a preferred embodiment, the electromagnetic field may have a frequency in the radio frequency range around 27.12 MHz. It is also conceivable that one or more radio frequencies or radio frequency ranges may be used.

Radio frequency generators are also commercially available and may be easily implemented in a manufacturing device. Moreover, also radio frequency radiation may be focused on the respective parts of the manufacturing device and its intensity and frequency may be adapted to the requirements.

It is further possible that the electromagnetic field, in particular electromagnetic radiation, is supplied in a frequency range different from the frequency ranges mentioned above.

The mold may be further loaded with a second material, which remains essentially unaltered by the electromagnetic field. This may, for example, be a material the electromagnetic field permeates without being absorbed by the material to a noticeable degree. In particular, the second material may be free from electromagnetic field absorbing material. "Essentially unaltered" may mean that the second material does not melt or start melting or become softer or harder.

All described embodiments relate to improved methods of manufacturing a component, in particular a piece of sports apparel. Further details and technical effects and advantages are described in detail above with respect to the mold.

The invention also concerns a component, in particular a piece of sports apparel, manufactured with a method as described herein. Moreover, the component may be a shoe sole, in particular a midsole.

The invention also concerns a shoe, in particular a sports shoe, with a component as described herein.

### 4. Short description of the figure

Possible embodiments of the present invention are further described in the following with reference to the following figures:
- **Fig. 1:**: illustrates the surprising effect of a sole mold according to the present invention;
- **Figs. 2a-2d:**: illustrate the permittivity of materials suitable for use as a mold according to the present invention;
- **Figs. 3a-3d:**: illustrate the dielectric loss factor of materials suitable for use as a mold according to the present invention;
- **Figs. 4a-4b:**: illustrate the storage modulus of materials suitable for use as a mold according to the present invention;
- **Figs. 5a-5b:**: illustrate the thermal expansion of materials suitable for use as a mold according to the present invention;
- **Figs. 6a-6d:**: illustrate the thermal conductivity of materials suitable for use as a mold according to the present invention;
- **Fig. 7:**: illustrates the improvement of process cycle time of materials suitable for use as a mold according to the present invention; and
- **Figs. 8a-8b:**: illustrate the improvement of process cycle time of materials suitable for use as a mold according to the present invention.

### 5. Detailed description of preferred embodiments

Possible embodiments of the different aspects of the present invention are described in the following detailed description primarily with respect to molds for molding a piece of apparel, in particular a cushioning element such as a midsole. However, it is emphasized, that the present invention is not limited to these embodiments. Rather, it may also be used for different kinds of cushioning elements for sports equipment, for example, knee- or elbow protectors.

Reference is further made to the fact that in the following only individual embodiments of the invention can be described in more detail. However, the skilled person will understand that the optional features and possible modifications described with reference to these specific embodiments may also be further modified and/or combined with one another in a different manner or in different sub-combinations without departing from the scope of the present invention. Individual features may also be omitted if they are dispensable to obtain the desired result. In order to avoid redundancies, reference is therefore made to the explanations in the preceding sections, which also apply to the following detailed description.

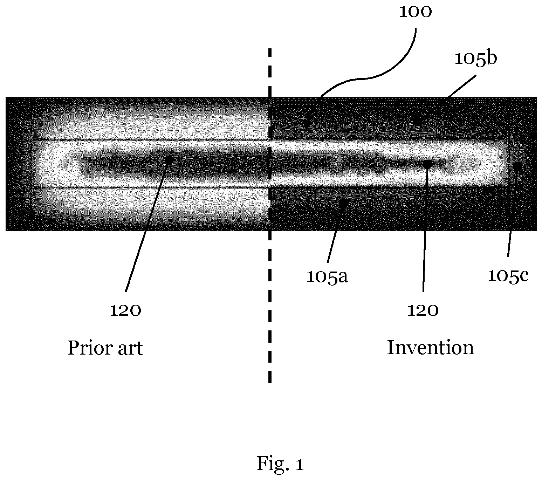

**Fig. 1** illustrates the surprising effect of a sole mold **100** according to the present invention.

The embodiment of **Fig. 1** shows a comparison of simulations for the thermal radiation, i.e. the heat radiation or temperature, of a conventional sole mold of the prior art and the sole mold **100** according to the present invention, wherein a shoe sole **120,** in particular a midsole **120**, is molded inside the two sole molds by dielectric heating and subsequent cooling. The comparison of their heat radiation is simulated after 10 minutes of cooling of the two sole molds and the midsole **120.**

This comparison between the mold of the prior art and the invention on cooling performance improvement were created using a simulation model where both the dielectric heating phenomenon and the thermodynamic heat conduction were characterized by a fully coupled multiphysics simulation model. The model uses the finite element method for calculation of the thermal energy induced inside of the mold construction during the presence of a radio frequency electric field. Material models represent the dielectric properties of the shoe sole **120** and the parts of the sole mold **100** construction, and through standard dielectric heating equations the correlation of used materials to induced heating power can be calculated with partial differential equations.

The sole mold **100** according to the present invention comprises a mixture of a polymer material and a filler material, wherein the filler material is adapted to allow a heating of the midsole **120** inside the sole mold **100** by means of an electromagnetic field, in particular radio frequency radiation. As can be seen in **Fig. 1****,** the filler material adapted to increase the thermal conductivity of the sole mold **100** shows a drastic decrease in cooling time for both the sole mold **100** and the midsole **120.** Moreover, the inventors have found out that the increased thermal conductivity does not influence the dielectric heating process. The conventional sole mold of the prior art comprises polyethylene terephthalate, PET, and has a thermal conductivity of approx. 0.35 W/m·K.

In the exemplary embodiment of **Fig. 1****,** the sole mold **100** of the present invention comprises a mixture of polyethylene terephthalate PET and boron nitride, BN, as filler material in an amount of 30 % by volume so that the sole mold **100** has a thermal conductivity of approx. 1.85 W/m·K, i.e. five times higher than for the conventional sole mold. The inventors have found out that this increased thermal conductivity leads to a significant reduction of the cooling time compared to the conventional sole mold.

In the case shown in **Fig. 1****,** the sole mold **100** comprises a bottom part **105a,** a top part **105b** and a side part **105c.** For example, the bottom part **105a** and the top part **105b** of the sole mold **100** may be plates having dimensions of 200 x 200 x 10 mm³. Other mold geometries as well as more or less parts of the sole mold **100** are also conceivable.

In another embodiment of the invention being experimentally investigated, the sole mold comprises a mixture of foamed PET and BN as filler material in an amount of 15 % by volume, which leads to a thermal conductivity of approx. 0.85 W/m·K. The inventors have found out that this experimentally investigated embodiment leads to a cooling time of approx. 5.9 min compared to 10 min for the conventional sole mold as mentioned above. In other words, the cooling time is approx. reduced by 41 %.

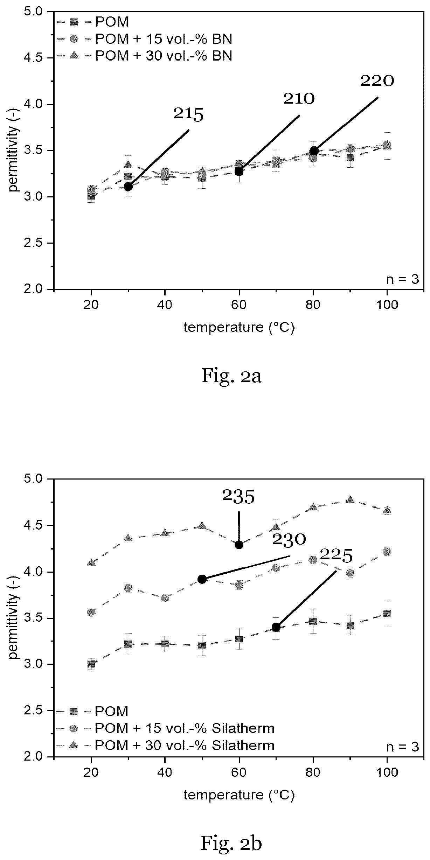

The following **Figs. 2a-8b** show the analysis of dielectric and thermal properties of different matrix materials comprising corresponding polymer and filler materials.

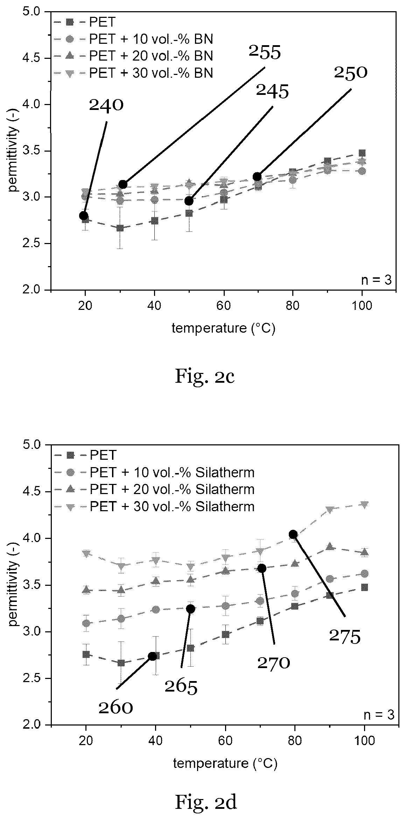

Values for the (relative) permittivity of materials with polyoxymethylene, POM, and polyethylene terephthalate, PET, over the temperature range from 20° C to 100° C (suitable for use in a sole mold **100**), measured at a frequency of approx. 27.12 MHz, are shown in **Figs. 2a-2d****:**
- Curve **210** (squares) in **Fig. 2a** shows the permittivity of POM without a filler material. Here, the permittivity measured is rising from 3.00 to 3.55, wherein the steady increase in permittivity may be caused by higher mobility of the polymer molecules resulting in better alignment to the electric field.
- Curve **215** (circles) shows the permittivity of a mixture of POM and boron nitride, BN, as filler material in an amount of 15 % by volume over the same temperature range as curve **210.** The values of the permittivity also raise from 3.00 to 3.55.
- Same applies for the values of the curve **220** (triangles) showing the permittivity of a mixture of POM and BN as filler material in an amount of 30 % by volume.
- Curve **225** (squares) in **Fig. 2b** shows the permittivity of POM without a filler material, wherein the permittivity measured is also rising from 3.00 to 3.55, quite similar as curve **210** in **Fig. 2a****.**
- Curve **230** (circles) shows the permittivity of a mixture of POM and SILATHERM^{®} (a mixture of Al2O3 and SiO2) as filler material in an amount of 15 % by volume.
- Curve 235 (triangles) shows the permittivity of a mixture of POM and SILATHERM^{®} in an amount of 30 % by volume.
- Here, the influence on the measured permittivity for the two filler materials BN and SILATHERM^{®} is clearly different. BN, on the one hand, may have no significant influence on the permittivity of POM. Therefore, it may be assumed that its permittivity is close to that of POM. On the other hand, the permittivity with SILATHERM^{®} is shifted to higher values with increasing filler content. The slope remains the same. This may suggest that the permittivity of SILATHERM^{®} is higher than that of POM, but stable over the investigated temperature range. The steady increase may be caused by POM.
- Curve **240** (squares) in **Fig. 2c** shows the permittivity of PET without a filler material. The permittivity of PET is rising with increasing temperature from 2.75 to a maximum of 3.48. Compared to POM of **Figs. 2a** and **2b****,** its overall permittivity is lower for the investigated temperature range, but its gradient is bigger.
- Curves **245** (circles), **250** (upward directed triangles) and 255 (downward directed triangles) show the permittivity of a mixture of PET and BN as filler material in an amount of 10 % (circles), 20 % (upward directed triangles) and 30 % (downward directed triangles) by volume. The influence of BN is quite low, similar to POM as shown in **Fig. 2a****.**
- Curves **260** (squares), **265** (circles), **270** (upward directed triangles) and **275** (downward directed triangles) in **Fig. 2d** show the permittivity of PET without a filler material (squares) and a mixture with SILATHERM^{®} as filler material in an amount of 10 % (circles), 20 % (upward directed triangles) and 30 % (downward directed triangles) by volume. The increasing content of SILATHERM^{®} may again lead to higher permittivity values. Compared to POM as shown in **Fig. 2b****,** the maximum values for 30 % by volume of SILATHERM^{®} are lower. Since the permittivity of a component will be influenced by the material values, this result may be caused by the lower values of PET.

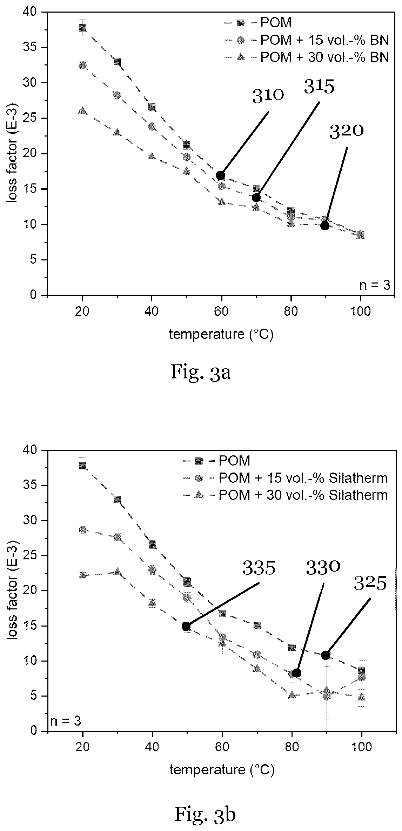

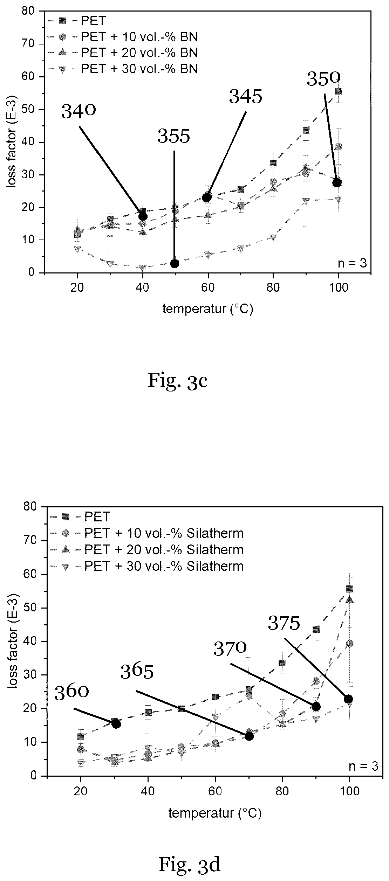

Values for the dielectric loss factor of materials with POM and PET together with BN or SILATHERM^{®} as filler materials according to the invention over the temperature range from 20° C to 100° C (suitable for use in a sole mold **100**) are shown in **Figs. 3a-3d**:
- Curve **310** (squares) in **Fig. 3a** shows the dielectric loss factor of POM without a filler material. Here, POM shows a decrease in the dielectric loss factor. Curve **315** (circles) shows the permittivity of a mixture of POM and BN as filler material in an amount of 15 % by volume over the same temperature range as curve **310.** The values of the curve **320** (triangles) show the permittivity of a mixture of POM and BN in an amount of 30 % by volume.
- The maximum dielectric loss factor for unfilled POM of 38 mU was measured at 20 °C and a temperature increase leads to a constant decrease in dielectric loss factor to a minimum of 8.6 mU at 100 °C. The enhanced movement of molecules due to higher temperatures and the resulting reduction of chain-chain interaction may cause this behavior.
- In **Fig. 3b****,** curve **325** (squares) shows the dielectric loss factor of unfilled POM, curve **330** (circles) shows the dielectric loss factor of a mixture of POM and SILATHERM^{®} in an amount of 15 % by volume and curve **335** shows the dielectric loss factor of a mixture of POM and SILATHERM^{®} as filler material in an amount of 30 % by volume. For both fillers, a filler content-dependent shift to lower values was measured. However, the progression of the curves is slightly different. A volumetric content of 15 or 30 % by volume of BN in **Fig. 3a** may reduce the measured loss to 32.5 mU and 27.0 mU respectively at 20 °C. If a volume-dependent mixing of loss factors in combination with a dielectric loss factor of 5 - 10 mU for BN is assumed, the values nearly match with the volume percentage-dependent values. For increasing temperatures, the curves slowly approach the trace of pure POM and have nearly the same level at 100 °C. In contrast, the use of SILATHERM^{®} may lead to an overall shift to lower dielectric loss values. This may lead to the assumption that the dielectric loss factor of SILATHERM^{®} may be close to 0 mU.
- Curve **340** (squares) in **Fig. 3c** shows the dielectric loss factor of PET without a filler material. Curves **345** (circles), **350** (upward directed triangles) and **355** (downward directed triangles) show the dielectric loss factor of a mixture of PET and BN as filler material in an amount of 10 % (circles), 20 % (upward directed triangles) and 30 % (downward directed triangles) by volume. PET shows a consistent increase in dielectric loss factor. The slopes of the measured curves **340-355** is nearly constant for the temperature range of 20 to 70 °C. A further increase in temperature may lead to an enhanced rise in dielectric loss factor, wherein the dielectric loss of unfilled PET reaches from 12 mU (at 20 °C) up to 55 mU (100 °C). Here, the use of filler materials may again lead to a reduction of the measured values.
- Curve **360** (squares) in **Fig. 3d** shows the dielectric loss factor of PET without a filler material. Curves **365** (circles), **370** (upward directed triangles) and **375** (downward directed triangles) show the dielectric loss factor of a mixture of PET and SILATHERM^{®} as filler material in an amount of 10 % (circles), 20 % (upward directed triangles) and 30 % (downward directed triangles) by volume.

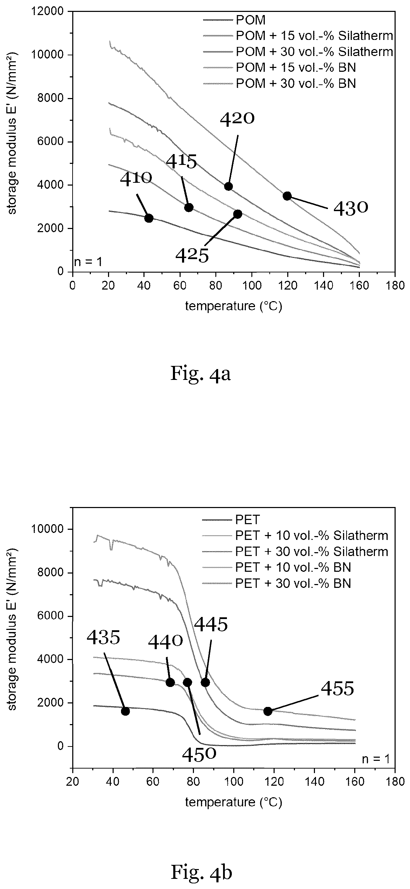

Values for investigating the storage modulus of materials with POM or PET and filler materials according to the invention over the temperature range from 20° C to 160° C are shown in **Figs. 4a** and **4b****:**
- Curves **410, 415, 420, 425** and **430** show the storage modulus of a mixture of POM together with BN or SILATHERM^{®} as filler materials in an amount of 15 % or 30 % by volume.
- Curves **435, 440, 445, 450** and **460** show the thermal expansion of a mixture of PET together with BN or SILATHERM^{®} as filler materials in an amount of 10 % or 30 % by volume.
- POMs glass transition temperature can be measured at about 60 °C. Therefore, a constant drop in mechanical properties in the investigated temperature range results. For the starting temperature of 20 °C, a maximum of 2816 N/mm² was measured. The modulus drops continuously to a minimum of 205 N/mm² at 160 °C.
- By the use of fillers, the maximum value is raised. The course of the curves is, however, steeper, resulting in nearly the same minimum as the unfilled POM shows. The increase in storage modulus may be caused by the higher stiffness of the filler materials. Additionally, the geometry of the fillers has an influence, too. Because of its platelet structure, BN may lead to higher values of storage modulus than the irregular shaped SILATHERM^{®}.

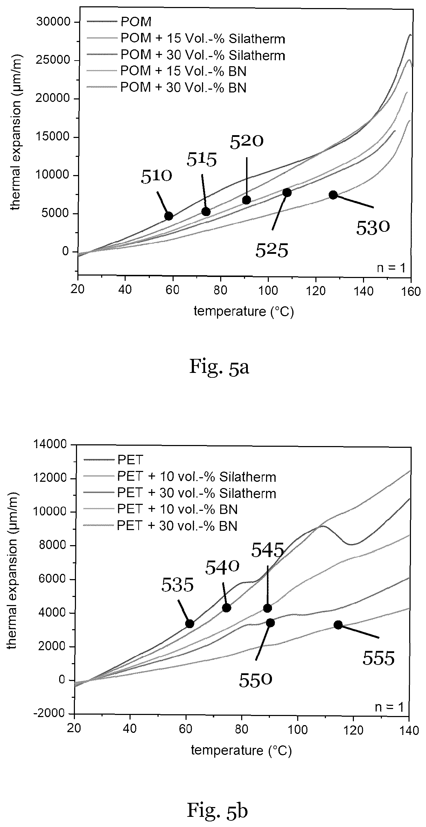

Values for investigating the thermal expansion of materials with POM or PET and filler materials according to the invention over the temperature range from 20° C to 100° C are shown in **Figs. 5a** and **5b****.** The term "thermal expansion" of a component is composed of the values of the individual materials used and their concentration. Additionally, the thermal expansion is dependent on the temperature applied and is therefore not constant over the whole temperature range.
- Curves **510, 515, 520, 525** and **530** show the thermal expansion of a mixture of POM together with BN or SILATHERM^{®} as filler materials in an amount of 15 % or 30 % by volume.
- Curves **535, 540, 545, 550** and **560** show the thermal expansion of a mixture of PET together with BN or SILATHERM^{®} as filler materials in an amount of 10 % or 30 % by volume.
- In general, components based on POM show higher values for thermal expansion than components based on PET. In the case of unfilled PET an unstable course of the curve, including a plateau at 85 °C and a local minimum at 120 °C can be seen, wherein the plateau may be caused by the glass transition of the material and a resulting relaxation of production-related stresses. The local minimum, however, may be possibly caused by a post crystallization of the material. Since the crystallization speed of PET is quite low, the crystallization may not be finished after the cooling in the injection molding process. These effects are not measured for filled PET components.
- However, both fillers may cause a reduction in thermal expansions independent of the plastic materials used. For the same amount of fillers, the thermal expansion is lower for BN compared to SILATHERM^{®}. The use of higher filler content leads to a further reduction in thermal expansion.
- Moreover, since a mold may be fixed on an aluminum plate, the thermal expansion coefficients of both materials should be as close as possible to avoid thermally caused stresses. The thermal expansion coefficient of aluminum is 23.8 µm/m·K. and for a temperature range of 20 °C to 100 °C a mean thermal expansion coefficient for POM of 141.0 µm/m·K was measured. By the use of SILATHERM^{®} with 30 % by volume, it may be reduced to 91.3 µm/m·K. In combination with BN as filler material with 30 % by volume, a coefficient of 65.1 µm/m·K could be achieved.
- In the case of PET as shown in **Fig. 5b****,** the initial value of 111.2 µm/m·K was reduced to 52.5 µm/m·K for SILATHERM^{®} with 30 % by volume. The same volumetric amount of BN may lead to a thermal extension coefficient of 34.3 µm/m·K which is quite close to that of aluminum. Thus, the component with a mixture of PET and BN with 30 % by volume could be seen as the best material regarding thermal expansion.

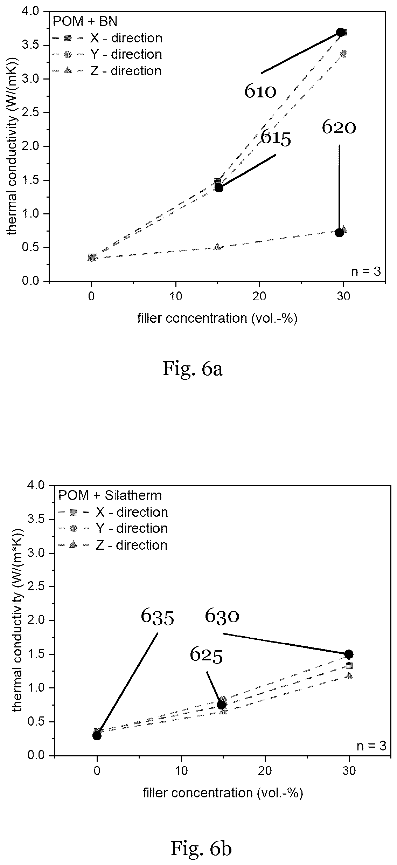

Values for the thermal conductivity of POM and PET in combination with BN or SILATHERM^{®} as filler materials with different filler concentrations are shown in **Figs. 6a-6d****.** These values were investigated for the three directions X, Y and Z, wherein X describes an injection direction, Y displays an orthogonal plane direction and Z marks a through plane:
- **Fig. 6a** shows the thermal conductivity of a mixture of POM and BN as filler material, wherein curve **610** describes X (squares), curve **615** describes Y (circles) and curve **620** describes Z (triangles).
- **Fig. 6b** shows the thermal conductivity of a mixture of POM and SILATHERM^{®} as filler material, wherein curve **625** describes X (squares), curve **630** describes Y (circles) and curve **635** describes Z (triangles).

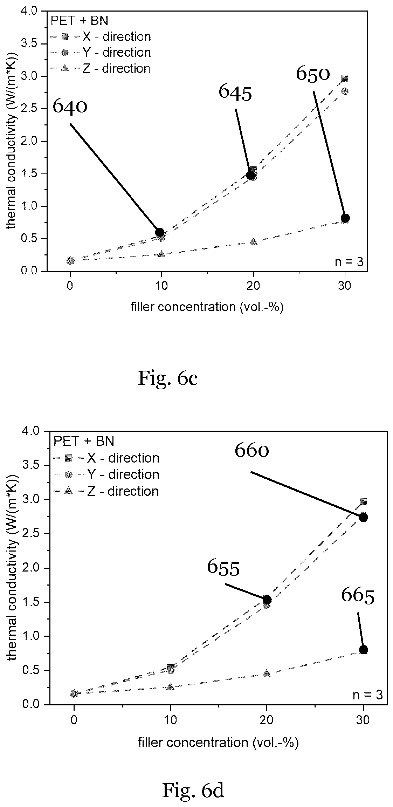

- **Fig. 6c** shows the thermal conductivity of a mixture of PET and BN as filler material, wherein curve **640** describes X (squares), curve **645** describes Y (circles) and curve **650** describes Z (triangles).
- **Fig. 6d** shows the thermal conductivity of a mixture of PET and SILATHERM^{®} as filler material, wherein curve **655** describes X (squares), curve **660** describes Y (circles) and curve **665** describes Z (triangles).
- For both filler materials in **Figs. 6a-6d****,** the thermal conductivity rises with increasing filler concentration. In combination with the platelet-shaped BN, the thermal conductivity in X- and Y-direction is significantly increased while a rather small improvement is measured in Z-direction. This behavior may be caused by a combination of filler orientation and the geometry dependent thermal conductivity of fillers. In the injection molding process, the platelet-shaped fillers may be predominantly oriented in the X-Y plane, which is a result of the occurring shear and expansion flows in the injection molding process. Additionally, BN shows a thermal conductivity of 400 W/m·K along the planes, while it is only 2 W/m·K through plane. For POM values up to 3.70 W/m·K in X-direction and 0.76 W/m·K in Z were measured. For PET a maximum of 2.97 W/m·K in X is relatively low, while the maximum of 0.77 W/m·K in Z is similar.
- In combination with the irregularly cubic shaped SILATHERM^{®}, the components show a more isotropic thermal conductivity. In contrast to BN, the thermal conductivity of SILATHERM^{®} is equal for all filler directions. However, the maximum achievable values are lower. This may be caused by the smaller thermal conductivity of SILATHERM^{®} of 14 W/m·K. For the combination of POM with SILATHERM^{®}, a maximum of 1.48 W/m·K was measured. For PET, however, the highest value of thermal conductivity was 1.16 W/m·K. This may be caused by the comparable lower thermal conductivity of the matrix material PET.
- As presented the components with BN show higher values of thermal conductivity compared to the combinations with SILATHERM^{®}. This may be caused by the differing intrinsic thermal conductivity of the fillers.

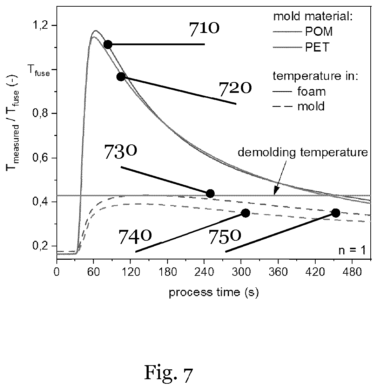

Next, the improvement of process cycle time by the use of modified mold materials is investigated. Here, unfilled POM and PET were used as mold material. **Fig. 7** shows the temperatures measured inside the welded foam and mold during heating and cooling. All given temperatures are displayed relative to the minimum temperature required for a sufficient fusion T_{fuse}.

If POM is used as sold mold material (curve **710**), the maximum temperature of the foam exceeds T_{fuse} by 18 %. The mold's peak temperature was 43 %. The process cycle is finished after 432 s. For PET as mold material (curve **720**), the peak in foam temperature is 115 %. The mold reaches a maximum temperature of only 39 %. The demolding temperature (curve 730) in the foam is achieved after 413 s. The maximum temperatures reached in foam (curves **710** and **720**) and mold (curves **740** and **750**) are 4 % higher for the use of POM. Due to POM's higher thermal conductivity, the foam temperature may be reduced faster in the beginning. As soon as the foam temperature reaches 75 % of T_{fuse} cooling is equal for both mold materials. For lower temperatures, the cooling becomes faster for PET. This may be caused by the higher temperature difference between foam and mold for PET. It could be seen that the largest part of one cycle may be consumed by passive cooling. For the unfilled mold materials cooling takes 393 s (PET), respectively 412 s (POM). This may be caused by the low thermal conductivity of foam and mold material. The 20 s of heating are comparably short, independent of the mold material.

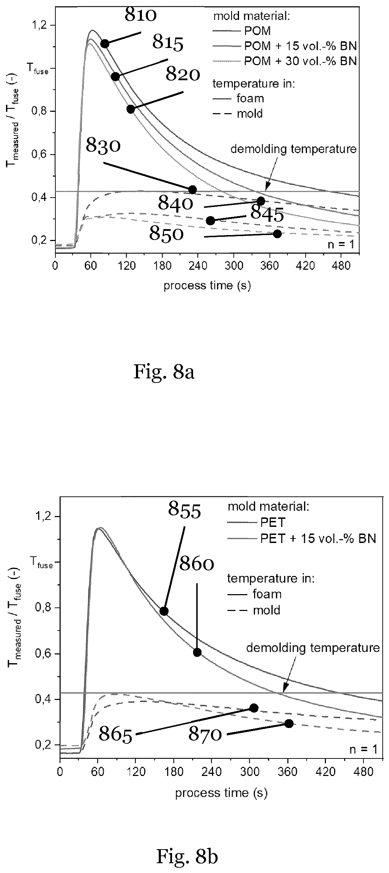

**Figs. 8a** and **8b** show filler concentrations of 15 and 30 % by volume for BN together with POM or PET. Here, the temperature measured inside the foam and the mold for the modified POM is shown in **Fig. 8a****.** With increasing filler content, the foam peak temperature (curves **810, 815** and **820**) is slightly lowered. In comparison to the 118 % of T_{fuse} of unfilled POM (curve **810**), 113 % and 111 % were measured for POM with 15 % by volume of BN and for POM with 30 % by volume of BN (curves **815 and 820**). At the same time, the temperature inside the mold is lower (curves **840, 845** and **850**). Due to the reduction of dielectric loss factor by the thermal conductive fillers, mold peak temperatures of 32 % and 31 % (curves **845** and **850**) of T_{fuse} may be obtained. The combination of enhanced thermal conductivity and lower temperatures of the mold may lead to a significant shortening of the cooling time. While the processing time for POM with 15 % by volume of BN is 307 s, it is further decreased to 251 s by the use of 30 % by volume of BN. This may mean an effective saving of up 29 % respectively 40 % of cycle time.

The same analysis was done for PET and 15 % by volume of BN in **Fig. 8b****.** Compared to the results with POM in **Fig. 8a****,** the peak temperature is similar for filled and unfilled mold material (curves **855** and **860**). Additionally, the peak temperature of the mold with a mixture of PET and 15 % by volume of BN (curve **870**) is 4 % higher compared to the unfilled mold (curve **865**). According to the dielectric characterization, the dielectric loss factor of both materials is quite similar, which might lead to a comparable temperature development. Nevertheless, the enhanced thermal conductivity may result in a faster heat transfer from foam to mold material. This then may result in a higher peak temperature for the thermal conductive mold material. Because of the enhanced thermal conductivity both, foam and mold, may show a faster cooling in the further course. A cycle time of 313 s may be achieved, which equals a reduction of cycle time by 20 %.

The skilled person will understand that other filler material(s) or mixtures as mentioned above are also conceivable. For example, the filler material may comprise a dielectric material, in particular a mixture of at least two inorganic materials, preferably at least one of the following: a metal nitride, a metal oxide, a metal carbide, a metal sulfide, a metal silicate, a silicon carbide and silicon nitride, most preferably boron nitride, BN, SILATHERM^{®} (a mixture of Al2O3 and SiO2) or SILATHERM^{®} Advance. Alternatively or in addition, the filler material comprises at least one of the following: a mixture of a carbon material and an inorganic material, carbon fiber, glassy carbon, carbon nanotubes, carbon nanobuds, aerographite, linear acetylenic carbon, q-carbon, graphene, a salt, a monocrystalline powder, a polycrystalline powder, an amorphous powder, a glass fiber. As discussed above, all of these described embodiments follow the same idea of achieving optimal properties for efficient molding by dielectric heating of the midsole inside the sole mold and the subsequent cooling of the sole mold and the midsole.

Alternatively or in addition, it is also possible to choose a filler material to get defined physical or mechanical properties in different areas of the component, in particular a piece of sports apparel like the midsole **120** by the use of an inventive mold according to the present invention. This may include different degrees of fusion in these different areas and thus graded physical or mechanical properties in the midsole 120. For example, different mixtures of the polymer material and the filler material may be used in different areas of the mold. Therefore, such embodiments open up the possibility to provided graded and thus tailored midsole properties in a reproducible manufacturing process.

Summarizing, the use of an inventive sole mold can therefore not only provide better quality end products, it can also provide significant benefits for the whole molding process like reduced cycle times in the particular in the field of sports apparel, in particular for shoe soles, so that the overall productivity can be increased.

In the following, further examples are described to facilitate the understanding of the invention:
1. A mold (100) for molding a component (120), in particular a piece of sports apparel (120), the mold (100) comprising:
   a. a mixture of a polymer material and a filler material,
   b. wherein the filler material is adapted to allow a heating of the component inside the mold (100) by means of an electromagnetic field.
2. The mold (100) of the preceding embodiment, wherein the filler material is adapted to increase the thermal conductivity of the mold (100).
3. The mold (100) of embodiment 1 or 2, wherein the filler material is adapted to increase the permittivity of the mold (100) compared to the component (120).
4. The mold (100) of one of the preceding embodiments, wherein the filler material comprises a dielectric material, in particular a mixture of at least two inorganic materials, preferably at least one of the following: a metal nitride, a metal oxide, a metal carbide, a metal sulfide, a metal silicate, a silicon carbide and silicon nitride, most preferably boron nitride, BN.
5. The mold (100) of one of the preceding embodiments, wherein the filler material comprises at least one of the following: a mixture of a carbon material and an inorganic material, carbon fiber, glassy carbon, carbon nanotubes, carbon nanobuds, aerographite, linear acetylenic carbon, q-carbon, graphene, a salt, a monocrystalline powder, a polycrystalline powder, an amorphous powder, a glass fiber.
6. The mold (100) of one of preceding embodiments, wherein the mixture comprises the filler material in an amount of 1 to 75 % by volume, in particular 1 to 30 % by volume, preferably 1 to 25 % by volume, more preferably 1 to 20 % by volume, most preferably 5 to 20 % by volume or the mixture comprises the filler material in an amount of 10 to 40 % by volume, in particular 15 to 35 % by volume.
7. The mold (100) of one of the preceding embodiments, wherein the polymer material comprises a thermoplastic material, preferably at least one of the following: polyethylene terephthalate, PET, polybutylene terephthalate, PBT, polyoxymethylene, POM, polyamide-imide, PAI, polycarbonate, PC, polyketones, PK, polyether ether ketone, PEEK, or polyethylene, PE.
8. The mold (100) of one of the preceding embodiments, wherein the polymer material is adapted to increase the permittivity of the mold (100) compared to the component (120).
9. The mold (100) of one of the preceding embodiments, wherein the polymer material is adapted to increase the dielectric loss factor of the mold (100).
10. The mold (100) of one of the preceding embodiments, wherein the polymer material comprises a foamed material.
11. The mold (100) of one of the preceding embodiments, wherein the mold (100) is a sole mold (100) and the component (120) is a shoe sole (120), in particular a midsole (120).
12. The mold (100) of one of the preceding embodiments, wherein the electromagnetic field is in the radio frequency range of 30 kHz - 300 GHz, preferably in the range of 1 MHz - 200 MHz, more preferably in the range of 1 MHz - 50 MHz, most preferably in the range of 25 - 30 MHz.
13. A method for manufacturing a component (120), in particular a piece of sports apparel (120), the method comprising the step of
   a. molding the component (120) using a mold (100) according to one of the preceding embodiments.
14. The method of the preceding embodiment, further comprising at least one of the following steps of:
   b. loading the mold (100) with a first material for the component (120) which comprises particles of an expanded material; and
   c. heating the first material and/or the mixture of the polymer material and the filler material of the mold (100) and/or a susceptor of the mold (100) by means of the electromagnetic field.
15. The method of the preceding embodiment, wherein the susceptor comprises at least one of the following materials: expanded polypropylene, ePP, polyurethane, PU, polylactide, PLA, polyether-block-amide, PEBA, or polyethylene terephthalate, PET.
16. The method of embodiment 14 or 15, wherein the heating step comprises the step of fusing the surfaces of the particles.
17. The method of one of embodiments 14 - 16, wherein the particles for the component comprise at least one of the following materials: expanded thermoplastic polyurethane, eTPU, expanded polyamide, ePA, expanded polyetherblockamide, ePEBA, polylactide, PLA, polyether-block-amide, PEBA, polyethylene terephthalate, PET, polybutylene terephthalate, PBT, thermoplastic polyester ether elastomer, TPEE.
18. The method of one of the embodiments 14 - 17, wherein the particles comprise of a foamed material.
19. The method of one of the embodiments 13 - 18, wherein the electromagnetic field is in the radio frequency range of 30 kHz - 300 GHz, preferably in the range of 1 MHz - 200 MHz, more preferably in the range of 1 MHz - 50 MHz, most preferably in the range of 25 - 30 MHz.
20. The method of one of the embodiments 14 - 19, wherein the mold (100) is further loaded with a second material, which remains essentially unaltered by the electromagnetic field.
21. A component (120), in particular a piece of sports apparel (120), manufactured with a method according to one of the embodiments 13 - 20.
22. The component (120) of the preceding embodiment, wherein the component (120) is a shoe sole (120), in particular a midsole (120).
23. A shoe, in particular a sports shoe, with a component (120) of embodiment 21 or 22.

## Claims

1. A mold (100) for molding a component (120), in particular a piece of sports apparel (120), the mold (100) comprising:
a. a mixture of a polymer material and a filler material,
b. wherein the polymer material comprises a foamed material, and
c. wherein the filler material is adapted to allow a heating of the component inside the mold (100) by means of an electromagnetic field.

2. The mold (100) of the preceding claim, wherein the filler material is adapted to increase the thermal conductivity of the mold (100) and/or is adapted to increase the permittivity of the mold (100) compared to the component (120).

3. The mold (100) of one of the preceding claims, wherein the filler material comprises a dielectric material, in particular a mixture of at least two inorganic materials, preferably at least one of the following: a metal nitride, a metal oxide, a metal carbide, a metal sulfide, a metal silicate, a silicon carbide and silicon nitride, most preferably boron nitride, BN.

4. The mold (100) of one of the preceding claims, wherein the filler material comprises at least one of the following: a mixture of a carbon material and an inorganic material, carbon fiber, glassy carbon, carbon nanotubes, carbon nanobuds, aerographite, linear acetylenic carbon, q-carbon, graphene, a salt, a monocrystalline powder, a polycrystalline powder, an amorphous powder, a glass fiber.

5. The mold (100) of one of preceding claims, wherein the mixture comprises the filler material in an amount of 1 to 75 % by volume, in particular 1 to 30 % by volume, preferably 1 to 25 % by volume, more preferably 1 to 20 % by volume, most preferably 5 to 20 % by volume or the mixture comprises the filler material in an amount of 10 to 40 % by volume, in particular 15 to 35 % by volume.

6. The mold (100) of one of the preceding claims, wherein the polymer material comprises a thermoplastic material, preferably at least one of the following: polyethylene terephthalate, PET, polybutylene terephthalate, PBT, polyoxymethylene, POM, polyamide-imide, PAI, polycarbonate, PC, polyketones, PK, polyether ether ketone, PEEK, or polyethylene, PE.

7. The mold (100) of one of the preceding claims, wherein the polymer material is adapted to increase the permittivity of the mold (100) compared to the component (120) and/or is adapted to increase the dielectric loss factor of the mold (100).

8. The mold (100) of one of the preceding claims, wherein the mold (100) is a sole mold (100) and the component (120) is a shoe sole (120), in particular a midsole (120).

9. The mold (100) of one of the preceding claims, wherein the electromagnetic field is in the radio frequency range of 30 kHz - 300 GHz, preferably in the range of 1 MHz - 200 MHz, more preferably in the range of 1 MHz - 50 MHz, most preferably in the range of 25 - 30 MHz.

10. A method for manufacturing a component (120), in particular a piece of sports apparel (120), the method comprising the step of
a. molding the component (120) using a mold (100) according to one of the preceding claims, further preferably comprising at least one of the following steps of:
b. loading the mold (100) with a first material for the component (120) which comprises particles of an expanded material; and
c. heating the first material and/or the mixture of the polymer material and the filler material of the mold (100) and/or a susceptor of the mold (100) by means of the electromagnetic field, wherein the susceptor comprises more preferably at least one of the following materials: expanded polypropylene, ePP, polyurethane, PU, polylactide, PLA, polyether-block-amide, PEBA, or polyethylene terephthalate, PET.

11. The method of claim 10, wherein the heating step comprises the step of fusing the surfaces of the particles.

12. The method of one of claims 10 or 11, wherein the particles for the component comprise at least one of the following materials: expanded thermoplastic polyurethane, eTPU, expanded polyamide, ePA, expanded polyetherblockamide, ePEBA, polylactide, PLA, polyether-block-amide, PEBA, polyethylene terephthalate, PET, polybutylene terephthalate, PBT, thermoplastic polyester ether elastomer, TPEE, preferably wherein the particles comprise a foamed material.

13. The method of one of claims 10 to 12, wherein the mold (100) is further loaded with a second material, which remains essentially unaltered by the electromagnetic field.

14. A component (120), in particular a piece of sports apparel (120), manufactured with a method according to one of the claims 10 to 13, wherein the component (120) is preferably a shoe sole (120), in particular a midsole (120).

15. A shoe, in particular a sports shoe, with a component (120) of claim 14.
